# EUROPEAN PATENT APPLICATION

(11) **EP 0 766 914 A1**
(43) Date of publication of application: **09.04.1997**
(21) Application number: 96202714.0
(22) Date of filing: 28.09.1996
(51) Int. Cl.: A01G 27/02

(54) **Means for keeping plants temporarily alive without watering them and method applying this means**

(30) Priority: 05.10.1995 BE 9500827
(71) Applicant: Van Laere, Guy Victor, 9080 Beervelde-Lochristi (BE)
(72) Inventor: Van Laere, Guy Victor, 9080 Beervelde-Lochristi (BE)
(74) Representative: Donné, Eddy

(57) **Abstract**

Means for keeping at least one plant (2) temporarily alive without having to water it, which means contains a pot (1) permeable to water filled with the required amount of earth (3) in which this plant (2) stands, and a recipient (4) impermeable to water which is provided around the above-mentioned pot (1), so that a space (7) is formed between said pot (1) and the recipient (4), characterized in that a gel (8), formed of a water-absorbing polymer and water, at least partially fills the above-mentioned space (7) between the pot (1) and the recipient (4). Such a recipient (4) and such a gel (8) are used as a packaging for the pot (1) in which the plant (2) stands in earth (3) in order to keep this plant (2) alive without having to water it during transport and when put on sale.

## Description

The present invention concerns a means for keeping one or several plants temporarily alive in earth, in particular during transport and while they are put on sale, which means consists of a pot filled with earth in which the plant is put.

In order to stay alive and look good, plants need water. Also, plants which do not stand in the open air are frequently watered. The watering of plants during transport and even while they are put on sale in for example a flower shop is difficult or even impossible. Also, after a long transport, plants often look wilted or they even may have died.

In order to prevent the earth from drying out as much as possible, the plants are conveyed in pots. Mostly, they are already cultivated in pots and these pots are consequently used during transport. At the end user's, the plants can be kept in these pots for a while.

Solutions have already been suggested to keep pot plants alive for a certain period of time without watering them.

A much applied solution consists in that the earth in which the plants are put is mixed with a product which can very efficiently absorb liquid, in particular water, and whereby this product can gradually give off the liquid, in particular water, to the roots of a plant as this plant requires water.

A very serious disadvantage of this application, is that pot plants usually stand at the market gardener's for a certain time before being shipped to the customer, whereby these plants very often stand in the open air. Under these circumstances, the required amount of water needed for the mixture, which consists of earth and the above-mentioned product and in which the plant is put, is entirely different under wet and dry weather conditions.

Another disadvantage of the above-mentioned application is that a large amount of the above-mentioned product is required in order to obtain a mixture which procures the desired moisture absorption and a slow release of moisture, since this product is relatively expensive.

Another means to temporarily provide a plant with the necessary water without having to water it is described in DE-A-2.925.150. This means consists of a recipient which is impermeable to water, which surrounds the pot which is permeable to water containing the plant, and of clay grains, in particular expanded clay grains, which are provided between the pot and the recipient.

The water-absorbing power of the clay grains is restricted, however, and consequently the required volume of clay grains is very large, and usually even larger than the volume of earth in the pot.

As a result, the recipient is considerably larger than the pot with the plant, which is not only unaesthetic, but also strongly increases the costs of transport per plant, and moreover requires much display space when put on sale.

Moreover, when the whole falls over, the clay grains may fall out of the recipient so that, in order to prevent this, a lid must be placed on these clay grains, which is time-consuming and expensive.

Further, it is difficult to determine the required amount of water, so that water often remains on the bottom of the recipient, which is harmful to the roots.

This is why such a means is only suitable to be applied by the consumer, and is not suitable to be used during transport.

Also, the present invention aims a means for keeping one or several plants in earth temporarily alive, which totally excludes the above-mentioned and other disadvantages and with which, among others during transport and when put on sale, the plants do not need to be watered.

This aim is reached according to the invention thanks to a means for keeping one or several plants temporarily alive without having to water them, which means contains a pot permeable to water filled with the required amount of earth in which this plant or these plants stand, and a recipient impermeable to water which is provided around the above-mentioned pot, so that a space is formed between said pot and the recipient, whereby a gel is formed of a water-absorbing polymer and water and which at least partially fills the above-mentioned space between the pot and the recipient.

In proportion to the amount of water, the gel takes up relatively little space.

For a long while, the plant put in the earth in the pot which is permeable to water can take up water from the gel, so that watering this plant is not immediately necessary.

The pot and the recipient, together with the gel, form a packaging for the plant with the earth which, especially during transport and when put on sale, conserve the plant very well without it having to be watered.

An advantage which is obtained in this manner is that the recipient and the water-absorbing polymer can be provided before the plants are shipped to the customer, and that one can estimate precisely how much water should be poured on the above-mentioned polymer.

Another advantage that is obtained by making use of the means according to the invention is that the required amount of the above-mentioned polymer is five times less than in case the polymer is directly mixed with the earth.

The use of water-absorbing polymers for keeping plants temporarily alive is known as such, among other from "Patent abstracts of Japan" vol. 13, No. 227 (C-600). However, these polymers are provided on the inside of the pot and they are only separated from the earth by means of a net.

It is difficult to cultivate plants directly in such a pot with polymer. Repotting the plant in such a pot immediately before transport is time-consuming, and implies a danger for the plant to die.

According to the invention, the pot may be permeable to water because it is porous, for example as it is made of burnt clay, or because it is provided with openings, in which case it may be made of plastic.

Water-absorbing polymers are suitable for the gel which are capable of absorbing 30 to 700 times their own weight of distilled or de-ionized water.

Also, the present invention concerns a method for keeping plants temporarily alive without watering them, whereby use is made of the above-mentioned means.

In particular, the invention also concerns a method to package one or several plants, particularly in view of the transport and the sale, especially when these plants already stand in a pot filled with earth.

The invention aims to package one or several plants in a pot in an economical manner, such that during said transport and sale, the plants are kept alive and remain fresh without having to water them, without the transport being made considerably more expensive or without making it difficult to put the plants on sale.

This aim is reached according to the invention by applying the above-mentioned means according to the invention, or in other words by putting a pot in which these plants stand in earth in a somewhat larger recipient, so that a space is created between the pot and the recipient, and by forming a gel of water-absorbing polymer and water in the space between the pot and the recipient.

The latter can be done by putting a quantity of the solid polymer in the recipient before or after the pot is provided in the recipient on the one hand, and by putting a quantity of water in the recipient or by putting a suspension of the polymer in water in said recipient on the other hand.

Hereby, the pots with plants may come directly from the nursery where these plants were raised for example in these pots at the end. The pots may even be packaged in the above-mentioned manner at the grower's before their transport to the customers.

Preferably, so much water is used that the polymer is practically saturated with water.

Preferably, the amount of polymer and water are dosed such that the gel reaches almost to the top edge of the pot.

In order to better explain the characteristics of the invention, the following preferred embodiment is given as an example only without being limitative in any way, with reference to the accompanying drawings in which:
figure 1 shows a section of a means according to the invention provided around a pot with a plant;
figure 2 shows a section analogous to that of figure 1, but with reference to a second embodiment of the means according to the invention;
figure 3 shows a section analogous to that of the figures 1 and 2, but with reference to a third embodiment of the means according to the invention.

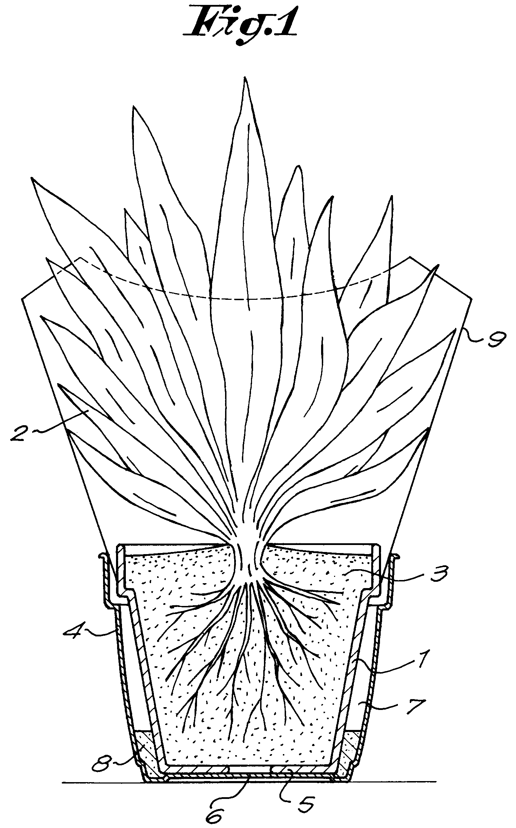

The means according to the invention, in the embodiment as represented in figure 1, forms a packaging of a plant 2 and contains a pot 1 which is made of a material permeable to water, for example burnt clay, in which the plant 2 is put together with the required earth 3.

This means contains an outer recipient 4 which is made of a material impermeable to water, for example of plastic, and which is provided around the pot 1.

This pot 1 rests with its lower part 5 on the bottom 6 of the outer recipient 4, such that a space 7 is formed between the pot 1 and the recipient 4.

The above-mentioned means further contains a gel 8 which at least partially fills the space 7 and which is formed of a water-absorbing polymer on the one hand which can very efficiently absorb water and subsequently give it off gradually, and of water on the other hand.

This water-absorbing polymer preferably is a polymer which is capable of absorbing 30 to 700 times its own weight of distilled or de-ionized water.

Suitable chemical types of polymers contain starch/acrylonitrile inoculated copolymers, neutralized cross-linked starch/acrylic acid copolymers, cross-linked sodium polyacrylate, cross-linked polyethylene oxide, vinyl acetate/unsaturated carboxylic acid copolymer, cross-linked polyacrylamide and cross-linked copolymers of acrylamide and acrylic acid neutralized as sodium or potassium salt.

A particularly suitable polymer is that which is marketed for example by the company Allied Colloids under the brand name Alcosorb 400.

These polymers normally have the shape of white crystals and are of such nature that, when these polymers are mixed with water in a correct proportion, a relatively thick gel is obtained after one to three hours since these polymers absorb the water entirely, whereby this gel is capable of gradually giving off the absorbed water again.

Preferably, the means according to the invention will be combined with a decorative cover 9, whereby one makes sure that this cover closes off the space 7 with its bottom edge, so that water loss from this space 7 as a result of evaporation is avoided.

This cover will preferably be glued to the recipient 4.

According to a variant of the embodiment, the pot 1 in which the plant is put together with the required amount of earth can be made of a material which is impermeable to water, such as plastic.

In this case, the space 7 in which the water-absorbing polymer is provided will be preferably formed between the bottom part 5 of this pot and the bottom 6 of the outer recipient 4 which is also made of a material which is impermeable to water.

In order to realize this space, ribs can for example be provided on the outside of the above-mentioned lower part 5 and/or on the inside of the bottom 6.

Moreover, holes can be provided in such an embodiment in the lower part 5 of the pot which make it possible for the plant to absorb the required amount of water from the gel which is formed in this case between the above-mentioned lower part 5 of the pot 1 and the bottom 6 of the recipient 4.

A method which applies the means according to the invention in the embodiment as represented in the accompanying figure 1, or in other words a method for packaging a plant 2 which stands in a pot 1 with the required amount of earth 3 in order to keep the plant 2 alive and in good shape without having to water it for a long time, especially during transport and when put on sale, is as follows.

The pot 1, filled with earth 3 and in which the plant 2 is put, is placed in the outer recipient 4, whereby the space 7 between the pot 1 and the recipient 4 is filled at least partially with the water-absorbing polymer.

Subsequently, a suitable quantity of water is poured on the polymer in the space 7 and a decorative cover 9 may be provided in such a manner that this cover closes off the space 7 with its bottom edge.

During the following period of one to three hours, all the water that is poured in will be absorbed by the above-mentioned polymer, whereby a relatively thick gel is formed.

This gel can gradually give off the water, whereby the water ends up in the earth 3 of the pot 1 through this pot 1 which is permeable to water, after which the roots of the plant will absorb the water as required.

Instead of first providing the water-absorbing polymer and then the correct amount of water in the space 7 provided to this end as separate, a suspension of the polymer in water can be made beforehand according to a variant of the above-described method, after which it is provided in the space 7, or, according to yet another variant, both, i.e. the water and the polymer, can be provided simultaneously in a correct proportion in the space 7 provided to this end.

According to yet another variant of the method, the polymer and possibly even the water is provided in the recipient 4 before the pot 1 containing the plant 2 is placed in it.

The gel 8 may already be formed, in which case the pot 1 can be pressed in this gel 8 which is pushed up around the pot 1.

All these embodiments of the method can be carried out by the grower, for example immediately before shipping the plants 2 to his customers. The pot 1 preferably is the nursery pot in this case, in which the plant 2 has been cultivated, at least in the end, either in a conservatory or in the open air.

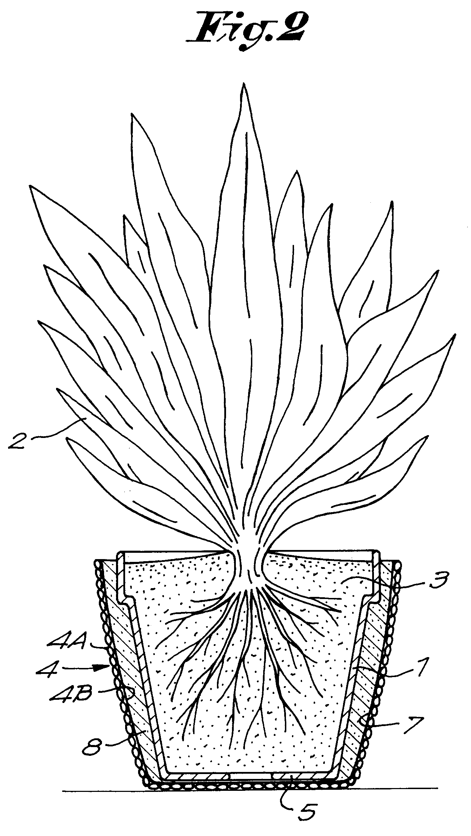

The embodiment of the means represented in figure 2 differs from the above-described embodiment in that the outer recipient 4 consists of a wicker basket 4A which is covered on the inside with a waterproof foil 4B, and in that the gel 8 reaches to almost the top edge of the outer recipient 4 which extends somewhat over the pot 1. Nor is there a decorative cover 9.

A method for packaging a pot 1 with this means is analogous to the above-described methods, with this difference that no decorative cover 9 is provided and that the quantity of water-absorbing polymer is dosed such that, after an absorbable amount of water has been added, and preferably about the maximum amount which can be absorbed, the space 7 is filled almost entirely.

The latter prevents that too much water is added to the polymer.

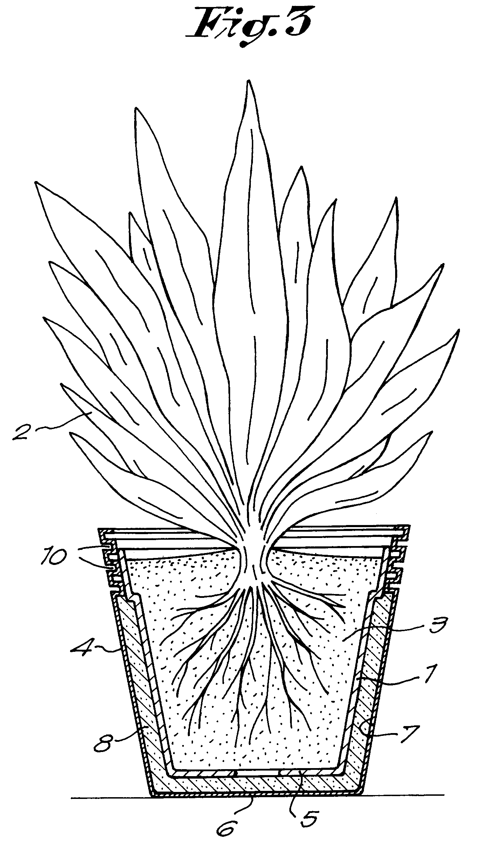

The embodiment of the means represented in figure 3 differs from the preceding embodiments in that the outer recipient 4 reaches to the top side of the pot 1 or even further and has ribs 10 on the inside at the top which extend parallel to the top edge over the perimeter of the recipient 4 and of which at least one connects to the outside of the pot 1 placed in it.

As a result, the space 7 is practically closed off at the top and the evaporation of water from the gel 8, which reaches almost to the top of the pot 1 and actually to these ribs 10, is reduced.

These ribs 10 are preferably provided in a slightly tapered part of the recipient 4, narrowing towards the bottom, whereby at least the top edge of the pot 1 is preferably somewhat tapered as well.

This recipient 4 is preferably made of plastic with a very small thickness of for example 0.2 mm, in which case the above-mentioned ribs 10 can be made of a corrugation of the plastic wall of the recipient, as is represented in figure 3. The ribs 10 may be somewhat elastically deformable in this case.

Nor in this embodiment is there a cover.

A method to apply this embodiment of the means is also analogous to the above-described methods, but because the ribs 10 close off the space 7, the water-absorbing polymer and the water must of course be provided in the recipient 4 before the pot 1 is put in place.

Preferably, the pot 1 is only put in place after the gel 8 has been formed. Due to the weight of this pot 1 with the earth 3 and the plant 2, it will penetrate in the gel 8 and push away at least a part thereof around the pot 1.

Hereby, the pot 1 can be suspended on the ribs 10 or rest with its lower part 5 on the gel 8 or the bottom 6 of the recipient.

The quantity of the polymer and the water is selected such that the gel 8 practically reaches up to the ribs 10.

The recipient 4 and the gel 8 can be removed by the end user, but this is not necessary. The recipient may be possibly provided with a decoration or the end user may place the recipient 4 in a somewhat bigger decorative pot or wicker basket or such.

The present invention is by no means limited to the embodiments described above and represented in the accompanying drawing; on the contrary, such a means for keeping plants temporarily alive and methods applying this means can be made in all sorts of variants while still remaining within the scope of the invention.

## Claims

1. Means for keeping at least one plant (2) temporarily alive without having to water it, which means contains a pot (1) permeable to water filled with the required amount of earth (3) in which this plant (2) stands, and a recipient (4) impermeable to water which is provided around the above-mentioned pot (1), so that a space (7) is formed between said pot (1) and the recipient (4), characterized in that a gel (8), formed of a water-absorbing polymer and water, at least partially fills the above-mentioned space (7) between the pot (1) and the recipient (4).

2. Means according to claim 1, characterized in that the pot (1) is made of a material which is permeable to water.

3. Means according to claim 1, characterized in that the pot (1) is made of a material which is impermeable to water, but which is provided with holes.

4. Means according to any of claims 1 to 3, characterized in that the recipient (4) is a whisker basket (4A) which is covered with a watertight foil (4B) on the inside.

5. Means according to any of claims 1 to 3, characterized in that the recipient (4) is made of plastic.

6. Means according to claim 5, characterized in that the recipient (4) has ribs (10) on the inside at the top which connect to the outside of the pot (1).

7. Means according to any of the preceding claims, characterized in that the water-absorbing polymer can absorb 30 to 700 times its own weight of water.

8. Means according to any of the preceding claims, characterized in that the water-absorbing polymer is a polymer of the groups formed of starch/acrylonitrile inoculated copolymers, neutralized cross-linked starch/acrylic acid copolymers, cross-linked sodium polyacrylate, cross-linked polyethylene oxide, vinyl acetate/unsaturated carboxylic acid copolymer, cross-linked polyacrylamide and cross-linked copolymers of acrylamide and acrylic acid neutralized as sodium or potassium salt.

9. Means according to any of the preceding claims, characterized in that it contains a decorative cover (9) which closes off the space (7) with its bottom edge, so that water loss from this space (7) as a result of evaporation is restricted.

10. Method for keeping one or several plants (2) temporarily alive without having to water them, whereby at least one plant (2) stands in a pot (1) with earth (3) and whereby this pot (1) is placed in a recipient (4) which is somewhat larger, so that a space (7) is formed between said pot (1) and the recipient (4), characterized in that a gel (8) is formed in the above-mentioned space (7) of a water-absorbing polymer and water.

11. Method according to claim 10, characterized in that it is a method for packaging a pot (1) filled with earth (3) in which stands at least one plant (2) in view of its transport and its being put on sale.

12. Method according to any of claims 10 and 11, characterized in that a pot (1) is used in which the plant (2) has been cultivated in a nursery.

13. Method according to any of claims 10 to 12, characterized in that the gel (8) is formed by providing a quantity of the solid polymer in the recipient (4) before or after the pot (1) is provided in the recipient (4) on the one hand, and by putting a quantity of water in the recipient (4) or by putting a suspension of the polymer in water in this recipient (4) on the other hand.

14. Method according to any of claims 10 to 13, characterized in that in order to form the gel (8), so much water is used that the polymer is practically saturated with water.

15. Method according to any of claims 10 to 14, characterized in that in order to form the gel (8), the amount of polymer and water are dosed such that the gel (8) almost reaches to the top edge of the pot (1) or even almost to the ribs (10) connecting to this pot (1) on the inside of the recipient (4).
